(19)

Europäisches
Patentamt
European
Patent Office
Office européen
des brevets

(11)  **EP 2 108 923 A2**

(12)  **EUROPEAN PATENT APPLICATION**

(43) Date of publication:
**14.10.2009 Bulletin 2009/42**

(51) Int Cl.:
**G01C 21/16** (2006.01)

(21) Application number: **09157768.4**

(22) Date of filing: **09.04.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **11.04.2008 RU 2008113873**

(71) Applicant: **Samsung Electronics Co., Ltd.
Suwon-si, Gyeonggi-do (KR)**

(72) Inventors:
 • **Garmonov, Alexander Vasillievich
  Gyeonggi-do (KR)**
 • **Pribytkov, Yury Nikolaevich
  Gyeonggi-do (KR)**

 • **Smirnov, Andrey Dmitrievich
  Gyeonggi-do (KR)**
 • **Fazal, Mohmmad Razaq
  Gyeonggi-do (KR)**
 • **Lee, Jung-Illwan
  Gyeonggi-do (KR)**
 • **Tandara, Vladimir
  Gyeonggi-do (KR)**
 • **Savinkov, Andrey Yurievich
  Gyeonggi-do (KR)**

(74) Representative: **Boakes, Jason Carrington
  Harrison Goddard Foote
  106 Micklegate
  York
  YO1 6JX (GB)**

(54)  **Mobile terminal having a hybrid navigation system, method for determining a location thereof, and computer-readable recording medium recording the method**

(57)  A mobile terminal having a hybrid navigation system and a method for determining a location thereof. A satellite navigation system receiver receives satellite data from a satellite. An inertial navigation system measuring device measures inertial data of the mobile terminal. A computing device receives the satellite data from the satellite navigation system receiver and the inertial data from the inertial navigation system measuring device, estimates a location of the mobile terminal using the inertial data, computes a state vector having location information obtained by correcting the estimated location using the satellite data and a state vector correlation error matrix having error information of the state vector, and determines the location of the mobile terminal using the state vector. The computing device uses a state vector correlation error matrix computed in a previous step when computing a state vector correlation error matrix in a current step.

FIG.1

**Description**

Field of the Invention

The present invention relates generally to radio engineering or navigation systems, and more particularly, to a method for determining a location of a mobile object or terminal having a hybrid navigation system.

Background to the Invention

Accurate information about the location of a mobile object may be required in a number of cases. The satellite navigation system is able to locate an object or a user anywhere in the world. An important condition for accurate coordinate estimation is that at least 4 satellite signals should be received in the 3-dimensional (3D) location mode. This condition is easily met when a location is determined in the open sky. In urban conditions, satellite signals may be blocked due to terrain relief or buildings. This happens, for example, in tunnels, roofed parking lots, etc. In these conditions regular satellite navigation receivers are often unable to receive a sufficient number of navigation signals to determine the correct location

An inertial navigation system may be applied to determine the location of a mobile object. If the initial position, velocity and movement direction of the mobile object are known, its position can be determined over the next time periods. The downside of this method is that a location error of the object is accumulated over time.

One of the most promising methods for increasing the location accuracy under difficult conditions is to use hybrid navigation systems. To implement this approach, an inertial measurement block estimating the location based on inertial measurements is added to the satellite navigation receiver.

An example referred to as a Loose integration algorithm is described in U.S. Patent No. 7,193,559 "Inertial GPS Navigation System With Modified Kalman Filter", which is incorporated herein by reference. This method uses satellite navigation system measurements to estimate the inertial navigation system error and correct for this error. The drawback of this algorithm is that correction calculation is impossible with fewer than 4 satellites in view.

A Tight integration algorithm (disclosed in U.S. Patent No. 6,900,760 "Adaptive GPS and INS Integration System", incorporated herein by reference) can also be used to solve this technical problem. Unlike the Loose integration algorithm, Tight integration allows calculating the correction terms with fewer than 4 satellites in view. However, this algorithm has high computation complexity because a matrix inverse to a larger size matrix must be calculated which increases the number of operations.

More computationally intensive algorithms are also provided, for example, ultra-tight integration (disclosed in U.S. Patent No. 6,516,021 "Global Positioning Systems And Inertial Measuring Unit Ultratight Coupling Method", incorporated herein by reference). Ultra-tight Integration is an integration of Global Positioning System (GPS) and Inertial Measurement Unit (IMU) systems at a low level. The disadvantage of the ultra-tight integration is high practical implementation complexity in mobile devices due to high computation complexity.

Algorithms using more sensors are also known. For example, two diversity antennas can be used instead of one GPS antenna. Alternatively, a magnetic sensor adjusting the object movement direction using the earth's magnetic field can be used. Among such algorithms is a technical solution described, for example, in U.S. Patent No. 6,480,152 "Integrated GPS/IMU Method And Microsystem Thereof", incorporated herein by reference, where a magnetic data microprocessor is utilized as an additional sensor. The disadvantages of the above methods are:

1. high implementation complexity; and
2. large size due to additional sensors the application of which in mobile devices is undesirable.

Another system and method is described in U.S. Patent No. 6,900,760 "Adaptive GPS and INS Integration System", incorporated herein by reference. According to the prior art method the system integrating GPS and Inertial Navigation System (INS) is an inertial measurement unit supplying angular rates on each orthogonal axis X, Y and Z, linear accelerations on the same orthogonal axes; GPS chipset to receive the Radio Frequency (RF) signal, which allows determining satellite position, velocity, pseudoranges to the observed object and pseudo Doppler.
The idea behind this prior art method is as follows:the initial object position and velocity are considered known, the angle between the body-frame and the local coordinate system - attitude error - is unknown;satellite data, i.e. satellite coordinates, pseudoranges, pseudo Doppler and satellite velocity are received;the received satellite data is used to form two rotation matrices: one is a rotation matrix for satellite coordinates and the other for satellite velocity; the rotation matrices are used to convert satellite coordinates and velocity from Earth-Centered, Earth-Fixed (ECEF) into the local system connected with the mobile object in question;the data from the mobile object, i.e., angular rates and linear accelerations are received;the received data about angular rates are utilized to form the rotation matrix R;the formed rotation matrix R is used to convert object linear acceleration data from the body-frame into the local coordinate system;

the dynamic matrix F, diagonal variance matrix Q, describing the inertial measuring device, and variance matrix W, describing the satellite navigation system are generated;the converted linear accelerations, position and velocity values as well as rotation matrices calculated at the previous step are used to calculate the current object location and its velocity;the converted satellite data, dynamic matrix F, diagonal variance matrix Q, describing the inertial measuring device, variance matrix W, describing the satellite navigation system, generated rotation matrices calculated at the previous step are supplied to the mobile object;at the mobile object, the predicted values for the state vector dx and error variance matrices P are calculated by means of Kalman filter;the Kalman filter gain factor matrix is obtained; and the state vector and error variance matrix are computed.

The Kalman filter update rate is inversely proportional to the tracking loop bandwidth. The Kalman filter gain factor matrix is multiplied by weighting coefficients equal to the ratio of time between the following measurements to time between the following non-correlated measurements.Variance matrix W is divided by adaptive matrix A. Alternatively, measurement noise matrix W is multiplied by weighting coefficients equal to the ratio of time between sequential non-correlated measurements and time between the following measurements.

The drawback of this method is high implementation complexity due to inverse matrix calculation when deriving the Kalman filter gain factor matrix. When calculation accuracy is fixed, this leads to algorithm instability and, consequently, impossibility to determine accurate object location.

Summary of the Invention

It is an aim of certain embodiments of the invention to solve, mitigate or obviate, at least partly, at least one of the problems and/or disadvantages associated with the prior art. Certain embodiments aim to provide at least one of the advantages described below.

An aspect of the present invention is to address at least the problems and/or disadvantages discussed above and to provide at least the advantages described below. Accordingly, an aspect of the present invention is to increase mobile object location accuracy under difficult conditions by means of hybrid navigation system.

According to an aspect of the present invention, there is provided a mobile terminal having a hybrid navigation system, including a satellite navigation system receiver for receiving satellite data from a satellite; an inertial navigation system measuring device for measuring inertial data of the mobile terminal; and a computing device for receiving the satellite data from the satellite navigation system receiver and the inertial data from the inertial navigation system measuring device, estimating a location of the mobile terminal using the inertial data, computing a state vector having location information obtained by correcting the estimated location using the satellite data and a state vector correlation error matrix having error information of the state vector, and determining the location of the mobile terminal using the sate vector,wherein the computing device uses a state vector correlation error matrix computed in a previous step when computing a state vector correlation error matrix in a current step, each element of the previous state vector correlation error matrix is compared to a preset threshold value, and the permitted number of elements exceeding the threshold value is set to at least 1.

According to an aspect of the present invention, there is provided a mobile terminal having a hybrid navigation system, including a satellite navigation system receiver for receiving satellite data from a satellite; an inertial navigation system measuring device for measuring inertial data of the mobile terminal; and a computing device for receiving the satellite data from the satellite navigation system receiver and the inertial data from the inertial navigation system measuring device, estimating a location of the mobile terminal using the inertial data, computing a state vector having location information obtained by correcting the estimated location using the satellite data and a state vector correlation error matrix having error information of the state vector, and determining the location of the mobile terminal using the sate vector,wherein the computing device converts a coordinate system of the satellite data and the inertial data into a coordinate system of a region where the mobile terminal is located, uses the converted satellite data and the converted inertial data when computing the state vector, and a rotation matrix to be used when converting the inertial data is corrected using the state vector.

According to an aspect of the present invention, there is provided a method for determining a location of a mobile terminal using satellite data from a satellite and inertial data of the mobile terminal, including converting a coordinate system of the satellite data and the inertial data into a coordinate system of a region where the mobile terminal is located; estimating the location of the mobile terminal using the converted inertial data; and computing a state vector having location information obtained by correcting the estimated location using the satellite data and a state vector correlation error matrix having error information of the state vector, and determining the location of the mobile terminal using the sate vector,wherein a state vector correlation error matrix computed in a previous step is used when computing a state vector correlation error matrix in a current step, each element of the previous state vector correlation error matrix is compared to a preset threshold value, and the permitted number of elements exceeding the threshold value is set to at least 1.

According to an aspect of the present invention, there is provided a method for determining a location of a mobile terminal using satellite data from a satellite and inertial data of the mobile terminal, including converting a coordinate system of the satellite data and the inertial data into a coordinate system of a region where the mobile terminal is located; estimating the location of the mobile terminal using the converted inertial data; and computing a state vector having location information obtained by correcting the estimated location using the satellite data and a state vector correlation error matrix having error information of the state vector, and determining the location of the mobile terminal using the sate vector,wherein a rotation matrix to be used when converting the inertial data is corrected using the state vector and the rotation matrix is generated using information about an angle of the mobile terminal for each of orthogonal axes **X**, **Y** and **Z** included in the inertial data.

According to an aspect of the present invention, there is provided a method for determining a location of a mobile object by means of hybrid navigation system integrating the satellite navigation system receiver to receive the navigation signal, which allows determining satellite position, velocity, pseudoranges to the mobile object and Doppler shift of the navigation signal carrier frequency, as well as the inertial navigation system measuring device and the computing device located at a mobile object from which angular rates on orthogonal axes **X**, **Y** and **Z** and linear accelerations on the orthogonal axes are supplied. The initial object position and velocity vector value are considered known. The data from satellites within the radio coverage zone, i.e. satellite coordinates, pseudoranges, Doppler shift of the navigation signal carrier frequency estimates are received. The received satellite data are used to form two rotation matrices: one of which is a rotation matrix for satellite coordinates and the other for satellite velocity. The rotation matrices are used to convert satellite coordinates and velocity from the Earth-centered, Earth-fixed (ECEF) system into the local system. The inertial data from the object inertial navigation system measuring device, i.e., angular rates and linear accelerations are received. The received mobile object angular rates data are utilized to form a rotation matrix **R** from the coordinate system connected with the object into the local coordinate system. The formed rotation matrix **R** is used to convert the object linear acceleration data. A transition matrix for the state vector, inertial measurement error correlation matrix **Q** describing the measurements taken by the inertial navigation system measuring device, satellite measurement correlation error matrix **W** describing the data supplied by the satellite navigation system receiver are generated. The obtained converted mobile object linear accelerations, position and velocity values as well as the generated rotation matrix are used to calculate the mobile object location and its velocity. The converted satellite data, transition matrix for the state vector, inertial measurement correlation error matrix **Q**, satellite measurement correlation error matrix **W**, the calculated object position and velocity are utilized to form the matrix **H**, describing linear relation between all measurements related to the satellite data and state vector components and to calculate the predicted values of the state vector **dx** as well as the correlation matrix of state vector components estimation errors (that is, state vector correlation error matrix) **P**. The obtained values are used to calculate the state vector and its correlation error matrix. The results of state vector calculation are employed to determine the current object location. The generated inertial measurement correlation error matrix **Q**, satellite measurement correlation error matrix **W** are multiplied by respective weighting coefficients. When calculating the predicted values of the state vector **dx** and its errors correlation matrix, the following matrix is approximated instead of inverse conversion:

$$\left( W + H \cdot P \cdot H^{T} \right)^{-1} \approx \frac{1}{W}\left( 1 - \frac{H \cdot P \cdot H^{T}}{W} \right),$$

where the weighting coefficients are selected such that $H \cdot p \cdot H^{T}/_{W} < 1$.The state vector correlation error matrix terms are compared to the specified threshold value,If even one term is greater than the threshold, the values (that is, elements) of the state vector correlation error matrix calculated in the previous step are used to obtain the state vector of the current step. If even one term is greater than the threshold, the variance matrix (that is, state vector correlation error matrix) calculated in the previous step is returned.

The claimed method of mobile object location by means of hybrid navigation system of an embodiment of the present invention integrating the satellite navigation system receiver to receive the navigation signal, which allows determining satellite position, velocity, pseudoranges to the object in question and Doppler shift of the navigation signal carrier frequency, as well as the inertial navigation system measuring device and calculation unit located at a mobile object from which angular rates on orthogonal axes **X**, **Y** and **Z** and linear accelerations on the orthogonal axes are supplied. The initial object position and velocity vector value are considered known, and the angle between the coordinate system (that is, Earth-centered Earth-fixed coordinate system) connected with the mobile object and the local coordinate system is unknown. The data from satellites within the radio coverage zone, i.e. satellite coordinates, velocities, pseudoranges, Doppler shift of the navigation signal carrier frequency estimates are received. The received satellite data are used to form two rotation matrices: one of which is a rotation matrix for satellite coordinates and the other is a rotation matrix for satellite velocity. The formed rotation matrices are used to convert satellite coordinates and velocity from the Earth-centered, Earth-fixed (ECEF) system into the local system. The inertial data from an object inertial navigation system measuring device, i.e., angular rates and linear accelerations are received. The received angular rates data are utilized to form a rotation matrix $R$ from the coordinate system connected with the object into the local coordinate system. The formed rotation matrix $R$ is used to convert the object linear acceleration data. A state vector transition matrix, inertial measurement correlation error matrix $Q$ describing the measurements taken by the inertial navigation system measuring device, satellite measurement correlation error matrix $W$ describing the data supplied by the satellite navigation system receiver are generated. The converted mobile object linear accelerations, position and velocity values as well as the generated rotation matrices are used to calculate the object location and its velocity. The converted satellite data, state vector transition matrix, inertial measurement correlation error matrix $Q$, measurement correlation error matrix $W$, the calculated object position and velocity are utilized to form the matrix $H$, describing linear relation between all measurements related to the satellite data and the state vector components and to calculate the predicted values of the state vector $dx$ as well as the correlation matrix of state vector components estimation errors (that is, state vector correlation error matrix) $P$. The obtained values are used to calculate the state vector and its correlation error matrix. The results of state vector calculation are employed to determine the current object location. Time interval $\tau$ is set on each time interval $\tau$.The state vector elements are used to form a vector the elements of which contain errors in determining the angle between the coordinate system connected with the mobile object and the local coordinate system. Zero values are assigned to the vector elements corresponding to errors in determining the angle between the coordinate system connected with the mobile object and the local coordinate system. The resulting vector is used to calculate the correcting rotation matrix used to correct the rotation matrix $R$ by multiplying it by the correcting matrix which gives the corrected rotation matrix $R$ over the specified time interval $\tau$.The corrected rotation matrix $R$ is utilized to convert the obtained object linear acceleration data and to form the state vector transition matrix.

The new sequence of processes provided by the solution of the present invention reduces the number of Kalman filter calculations compared to the prior art method. This advantage allows not only simpler and smaller mobile object calculation unit but also provides high accuracy of mobile object location.

Fewer number of calculations and high location accuracy make it possible to apply the invention in different mobile devices or terminals including low tier user mobile devices, and make good use of the invention under difficult conditions, for instance, when satellite signals are blocked by terrain relief of buildings (tunnels, roofed parking lots and other built-up areas both urban and suburban).

The new sequence of processes provided by the solution of the present invention ensures high accuracy of mobile object location and stability of its iterative coordinate estimation procedure. These features make it possible to apply the invention under difficult conditions, for instance, when satellite signals are blocked by terrain relief of buildings. This is a very significant advantage of the proposed embodiments of the present invention because many technical solutions including those described in the prior sections either do not work under difficult conditions or work inefficiently.

The embodiments of the present are invention intended for one and the same technical task, i.e. to increase accuracy of mobile object location under difficult conditions by means of the hybrid navigation system. The proposed embodiments of the claimed method allow using the present invention by the first and/or second variant, thus ensuring the possibility to design the hybrid navigation system to get the maximum technical effect.

The above and other features, aspects, and advantages of the present invention will be more apparent from the following detailed description when taken in conjunction with the accompanying drawings.

Brief Description of the Drawings

By way of example only, embodiments of the invention will now be described with reference to the attached drawings in which:

FIG. 1 illustrates a general view of a mobile object having a hybrid navigation system according to an embodiment of the present invention;
FIG. 2 illustrates a block-diagram of the algorithm according to a first embodiment of the present invention;
FIG. 3 illustrates a block-diagram of the algorithm according to a second embodiment of the present invention;
FIG. 4 illustrates simulation conditions and dependence of the number of satellites on time from the movement start;
FIG. 5 illustrates the trajectory of the mobile object according to the first exemplary embodiment of the present invention;
FIG. 6 illustrates the trajectory of the mobile object according to the second embodiment of the present invention; and
FIG. 7 illustrates the trajectory of the mobile object according to embodiments of the present invention.

Description of Embodiments of the Invention

Exemplary embodiments of the present invention will now be described in detail with reference to the annexed drawings. In the following description, a detailed description of known functions and configurations incorporated herein has been omitted for clarity and conciseness.

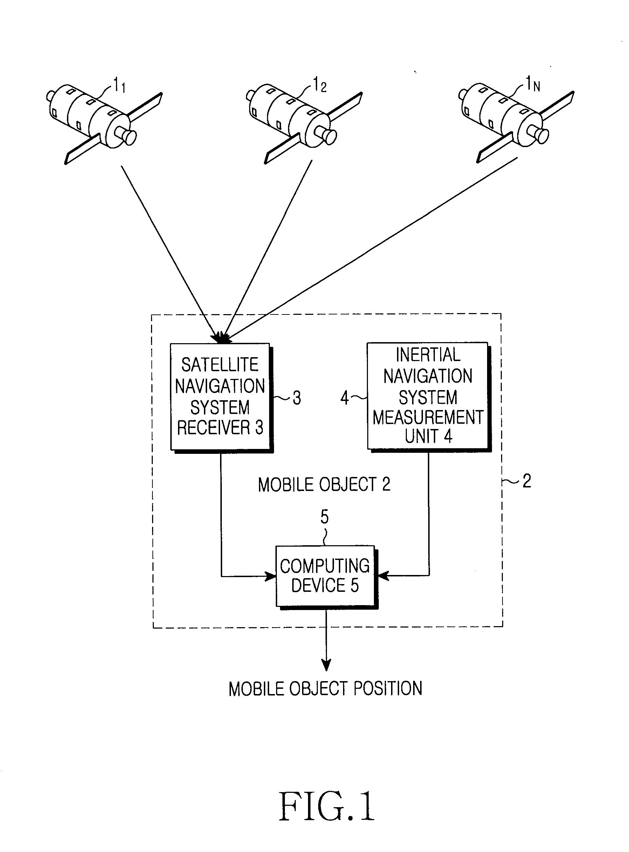

FIG. 1 illustrates a general view of an embodiment of the claimed invention as follows: $1_1$ - $1_N$ - satellites,2 is a mobile object,3 is a satellite navigation system receiver,4 is a inertial navigation system measuring device, and5 is a computing device.

Hereinafter, the mobile object includes an arbitrary mobile terminal capable of receiving and/or transmitting a radio signal with reference to FIG.s 1 and 2.

A method for determining the mobile object location by means of a hybrid navigation system is embodied in the hybrid navigation system combining the satellite navigation system receiver 3 for navigating signal reception which allows determination of satellite positions $1_1$ - $1_N$, satellite velocities, pseudorange to the mobile object 2 and the navigating signal carrier frequency Doppler shift estimation, the inertial navigation system measuring device 4 mounted on the mobile object 2 from which the angular rates of orthogonal axes **X**, **Y** and **Z** and the linear accelerations of orthogonal axes are provided, and the computing device 5.

The initial position of the mobile object 2 and the initial vector value of its velocity are known. The data from satellites $1_1$ - $1_N$, located in the radio coverage area are received in step s101: coordinates and velocities of satellites $1_1$ - $1_N$, pseudoranges, and the navigating signal carrier frequency Doppler shift estimations.

Using the obtained satellite data two rotation matrixes are generated in step S103: a first is the satellite coordinates rotation matrix, -and a second is the satellite velocity rotation matrix.

Using the generated rotation matrixes, satellite coordinates and their velocities are converted in step S105 from the Earth-centered fixed system of coordinates, as disclosed in European Organization for the Safety of Air Navigation, Institute of Geodesy and Navigation (IfEN), «Reference WGS 84 Implementation Manual» Version 2.4., February 12, 1998., p. 68, incorporated herein by reference, into the local coordinate system. As local system of coordinates it is possible to use, for example, Gauss-Kruger projection, as described in European Organization for the Safety of Air Navigation, Institute of Geodesy and Navigation (IfEN), «Reference WGS 84 Implementation Manual» Version 2.4., February 12, 1998., p. 100, incorporated herein by reference.

The data from the inertial navigation system measuring device 4 of the mobile object 2 are received -in step S121, where angular rates $\omega_k = (\omega_x, \omega_y, \omega_z)$ and linear accelerations $f_k = (f_x, f_y, f_z,)$ of the mobile object 2. Using the received angular rate data of the mobile object 2, the rotation matrix **R** of the coordinate system (that is, Earth-centered fixed coordinate system) coupled to the mobile object 2 is converted in step S123 into the local coordinate system, as set forth in Equation (1):

$$R_{k+1} = R_k \cdot \left( 2 \cdot \begin{pmatrix} 1 & 0 & 0 \\ 0 & 1 & 0 \\ 0 & 0 & 1 \end{pmatrix} + \Delta T \cdot \begin{pmatrix} 0 & -\omega_z & \omega_y \\ \omega_z & 0 & -\omega_x \\ -\omega_y & \omega_x & 0 \end{pmatrix} \right) \left( 2 \cdot \begin{pmatrix} 1 & 0 & 0 \\ 0 & 1 & 0 \\ 0 & 0 & 1 \end{pmatrix} - \Delta T \cdot \begin{pmatrix} 0 & -\omega_z & \omega_y \\ \omega_z & 0 & -\omega_x \\ -\omega_y & \omega_x & 0 \end{pmatrix} \right)^{-1} \quad (1)$$

where $\Delta T$ is the time elapsed from the moment of the previous data reception from the inertial navigation system measuring device 4.

Using the generated rotation matrix **R**, the linear acceleration data of the mobile object 2 are converted in step S125 using Equation (2):

$$f_k = R \cdot f_k \qquad\qquad (2)$$

The transition matrix for the state vector, the inertial measurement correlation error matrix **Q**, describing the measurements performed by the inertial navigation system measuring device 4, and the satellite measurement correlation error matrix **W** describing the data arriving from the satellite navigation system receiver 3, for example as described by S. Godha "Performance Evaluation of Low Cost MEMS-Based IMU Integrated with GPS for Land Vehicle Navigation Application", incorporated herein by reference are generated in step S107.

Using the converted linear acceleration data of the mobile object 2, and also the value of position, velocity, the generated rotation matrixes, the position of the mobile object 2 and its movement velocity are calculated and estimated in step S127. For example Godha.

The inertial measurement correlation error matrix **Q** and the satellite measurement correlation error matrix **W** are multiplied in step S109 by preset weight coefficients, and a weight coefficient setting condition is described later.

The converted satellite data, the state vector transition matrix, the inertial measurement correlation error matrix **Q** describing the measurements performed by the inertial navigation system measuring device 4, the satellite measurement correlation error matrix **W** describing the data arriving from the satellite navigation system receiver 3, calculated positions of the mobile object 2 and its movement velocity are used in step S111 for the generation of the matrix **H**

describing the linear junction of all measurements related to the satellite data and the state vector components, and for the calculation of predicted condition vectors **dx** and the state vector component estimation correlation error matrix (that is, state vector correlation error matrix) **P**. Thus the matrix **H** is generated, for example, by Equation (3):

$$H = \begin{pmatrix} H(\rho) \\ H(\dot\rho) \end{pmatrix},$$

where

$$H(\rho) = \begin{pmatrix} \dfrac{\partial \rho^1}{\partial r_x} & \dfrac{\partial \rho^1}{\partial r_y} & \dfrac{\partial \rho^1}{\partial r_z} & 0 & 0 & 0 & \dots & 1 & 0 \\ \dots & \dots & \dots & \dots & \dots & \dots & \dots & \dots & \dots \\ \dfrac{\partial \rho^N}{\partial r_x} & \dfrac{\partial \rho^N}{\partial r_y} & \dfrac{\partial \rho^N}{\partial r_z} & 0 & 0 & 0 & \dots & 1 & 0 \end{pmatrix}_{N\times 15}$$

$$H(\dot\rho) = \begin{pmatrix} \dfrac{\partial \dot\rho^1}{\partial r_x} & \dfrac{\partial \dot\rho^1}{\partial r_y} & \dfrac{\partial \dot\rho^1}{\partial r_z} & \dfrac{\partial \dot\rho^1}{\partial v_x} & \dfrac{\partial \dot\rho^1}{\partial v_y} & \dfrac{\partial \dot\rho^1}{\partial v_z} & \dots & 0 & 1 \\ \dots & \dots & \dots & \dots & \dots & \dots & \dots & \dots & \dots \\ \dfrac{\partial \dot\rho^N}{\partial r_x} & \dfrac{\partial \dot\rho^N}{\partial r_y} & \dfrac{\partial \dot\rho^N}{\partial r_z} & \dfrac{\partial \dot\rho^N}{\partial v_x} & \dfrac{\partial \dot\rho^N}{\partial v_y} & \dfrac{\partial \dot\rho^N}{\partial v_z} & \dots & 0 & 1 \end{pmatrix}_{N\times 15} \quad (3)$$

where **N** -is the number of the satellites in the radio coverage zone, $\rho$ are the pseudoranges, and $\dot\rho$ is the navigating signal carrier frequency Doppler shift estimation.

The state vector correlation error matrix **P** is calculated by Equation (4):

$$P_{k+1}^- = \Phi_k P_k \Phi_k^T + Q_k \qquad \dots (4)$$

The predicted value of the state vector **dx** is calculated, by Equation (5):

$$dx_{k+1}^- = \Phi_{k+1} \cdot dx_k \qquad \dots (5)$$

Using the calculated values, the state vector and its correlation error matrix are calculated in step S113 by Equation (6):

$$K_{k+1} = P_{k+1}^- H_{k+1}^T \left( H_{k+1} P_{k+1}^- H_{k+1}^T + W_{k+1} \right)^{-1}$$

$$dx_{k+1} = dx_{k+1}^- + K_{k+1} \left( y_{k+1} - H_{k+1} dx_{k+1}^- \right)$$

$$P_{k+1} = P_{k+1}^- - K_{k+1}H_{k+1}P_{k+1}^-,$$

$$y_k = \begin{pmatrix} \Delta\rho \\ \Delta\dot{\rho} \end{pmatrix} - \begin{pmatrix} \Delta\tilde{\rho} \\ \Delta\dot{\tilde{\rho}} \end{pmatrix} \qquad \ldots(6)$$

In Equation (6), '~' designates the predicted measured values calculated by the estimated positions and the mobile object velocity, and '$\Delta$' designates a difference of the corresponding observed values.

During the calculation of the state vector predicted values **dx** and its correlation error matrix, the matrix is inverted by an approximated calculation formula shown in Equation (7):

$$\left(W + H\cdot P\cdot H^T\right)^{-1} \approx \frac{1}{W}\left(1 - H\cdot P\cdot H^T/W\right) \qquad \ldots(7)$$

Thus the weight coefficients by which the inertial measurement correlation error matrix **Q** and the satellite measurement correlation error matrix **W** are multiplied are selected to satisfy the condition $H\cdot P\cdot H^T/_W < 1$.

Using the calculated values, the state vector and its correlation error matrix are calculated. The state vector correlation error matrix elements are compared in step S117 to the preset threshold value if even one element exceeds the preset threshold value. For the calculation of the current state vector, the calculated values of the previous state vector error matrix are used. In case of threshold excess by even one element, the state vector error matrix calculated in the previous stage is returned and used. The permitted number of elements exceeding the threshold value may be set to at least 1 or to be less than or equal to the total number of elements.

According to the results of the calculated state vector, the current object position is defined (S115).

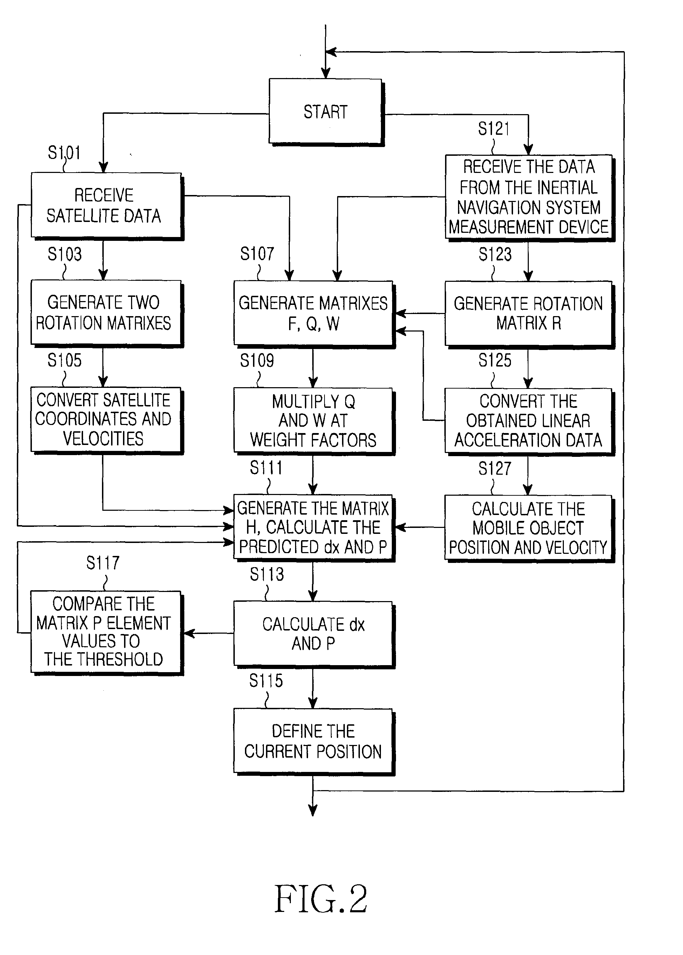

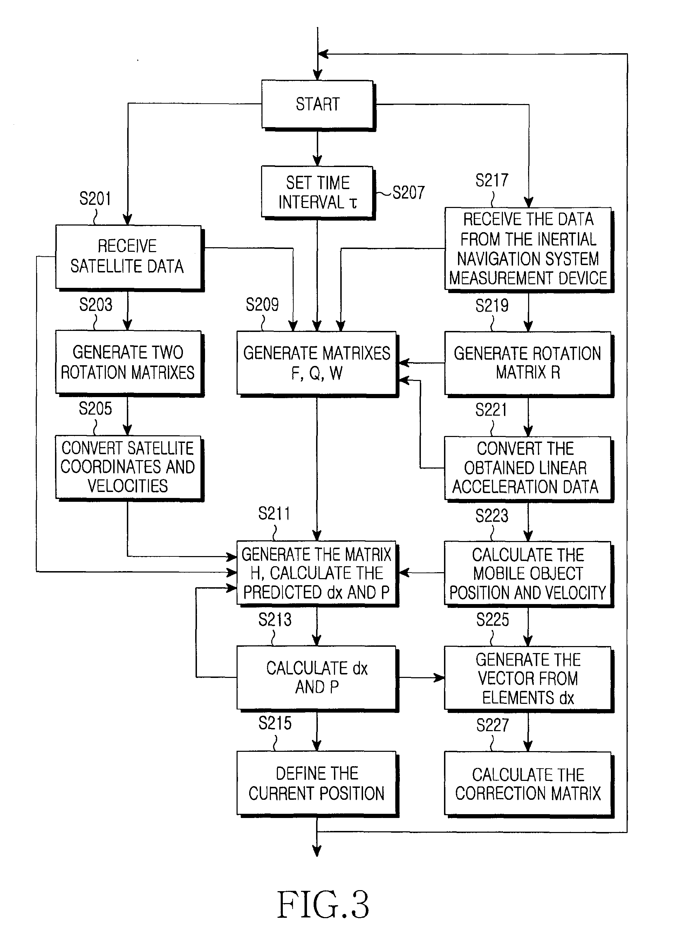

A method for determining the mobile object location by means of hybrid navigation system by a second embodiment of the present invention is performed in the hybrid navigation system uniting the satellite navigation system receiver 3 for navigating signal reception which allows determination of satellite positions, satellite velocities, pseudoranges to the mobile object 2 and the navigating signal carrier frequency Doppler shift estimation, the inertial navigation system measuring device 4 mounted on the mobile object 2 from which the angular rates of orthogonal axes **X**, **Y** and **Z** and the linear accelerations by orthogonal axes are provided, and the computing device 5, and will be described with reference to FIGs. 1-3.

The initial position of the mobile object 2 and the initial value of its velocity vector are known, and the angle between the coordinate system (that is, Earth-centered fixed coordinate system) associated to the mobile object 2 and the local system of coordinates are not known.

The data from the satellites $1_1$ - $1_N$ located in the radio coverage area, for example, coordinates and velocities of satellites $1_1$ - $1_N$, pseudoranges, and the navigating signal carrier frequency Doppler shift estimations arrive in step S201 at the satellite navigation system receiver 3.

From the satellite navigation system receiver 3 and the inertial navigation system measuring device 4, the data are applied to the computing device 5.

In the computing device 5, the time interval t is set and in each time interval t the data of satellites $1_1$ - $1_N$ being in the radio coverage area are received. Using the obtained satellite data, two rotation matrixes are generated in step S203, one of which -is the rotation matrix for satellite coordinates, another - is the rotation matrix for satellite velocities.

Using the generated rotation matrixes, the satellite coordinates and their velocities are converted in step S205 from being Earth-centered into a fixed coordinate system in the local coordinate system.

The inertial data from the inertial navigation system measuring device 4 of the mobile object 2, the angular rates $\omega_k=(\omega_x,\omega_y,\omega_z)$ and the linear accelerations $f_k=(f_x,f_y,f_z)$ of the mobile object 2 are received in step S217. Using the received data of angular velocities of the mobile object 2, the rotation matrix **R** of the coordinate system associated to the mobile object 2 is generated in step S219 in the local coordinate system using Equation (8):

$$R_{k+1} = R_k \cdot \left( 2 \cdot \begin{pmatrix} 1 & 0 & 0 \\ 0 & 1 & 0 \\ 0 & 0 & 1 \end{pmatrix} + \Delta T \cdot \begin{pmatrix} 0 & -\omega_z & \omega_y \\ \omega_z & 0 & -\omega_x \\ -\omega_y & \omega_x & 0 \end{pmatrix} \right) \left( 2 \cdot \begin{pmatrix} 1 & 0 & 0 \\ 0 & 1 & 0 \\ 0 & 0 & 1 \end{pmatrix} - \Delta T \cdot \begin{pmatrix} 0 & -\omega_z & \omega_y \\ \omega_z & 0 & -\omega_x \\ -\omega_y & \omega_x & 0 \end{pmatrix} \right)^{-1}$$

$$\ldots (8)$$

where $\Delta T$ is the time elapsed from the moment of the previous data reception from the inertial navigation system measuring device 4.

Using the generated rotation matrix $\boldsymbol{R}$, the linear acceleration data of the mobile object 2 are converted in step S221 using Equation (9):

$$f_k = R \cdot f_k \qquad \ldots (9)$$

The state vector transition matrix, the inertial measurement correlation error matrix $\boldsymbol{Q}$ describing the measurements performed by the inertial measuring device, and the satellite measurement correlation error matrix $\boldsymbol{W}$ describing the data arriving from the satellite navigation system receiver 3 are generated in step S209, for example, as described by Godha.

Using the converted linear acceleration data of the mobile object 2, and also values of the position, velocity, the generated rotation matrixes, the location of the mobile object 2 and its movement velocity are calculated and estimated in step S223, as described in Godha.

The converted satellite data, the state vector transition matrix, the inertial measurement correlation error matrix $\boldsymbol{Q}$ describing the measurements performed by the inertial navigation system measuring device 4, the satellite measurement correlation error matrix $\boldsymbol{W}$ describing the data arriving from the satellite navigation system receiver 3, calculated mobile object 2 location and its movement velocity are used in step S211 for generation of the matrix $\boldsymbol{H}$ describing the linear association of all measurements related to the satellite data and the state vector components, and for calculation of predicted values of the state vectors $\boldsymbol{dx}$ and the state vector component correlation error matrix estimation (that is, state vector correlation error matrix) $\boldsymbol{P}$. Thus the matrix $\boldsymbol{H}$ is generated, for example, by Equation (10)

$$H = \begin{pmatrix} H(\rho) \\ H(\dot\rho) \end{pmatrix},$$

where

$$H(\rho) = \begin{pmatrix} \dfrac{\partial \rho^1}{\partial r_x} & \dfrac{\partial \rho^1}{\partial r_y} & \dfrac{\partial \rho^1}{\partial r_z} & 0 & 0 & 0 & \ldots & 1 & 0 \\ \ldots & \ldots & \ldots & \ldots & \ldots & \ldots & \ldots & \ldots & \ldots \\ \dfrac{\partial \rho^N}{\partial r_x} & \dfrac{\partial \rho^N}{\partial r_y} & \dfrac{\partial \rho^N}{\partial r_z} & 0 & 0 & 0 & \ldots & 1 & 0 \end{pmatrix}_{N \times 15}$$

$$H(\dot{\rho}) = \begin{pmatrix} \dfrac{\partial \dot{\rho}^1}{\partial r_x} & \dfrac{\partial \dot{\rho}^1}{\partial r_y} & \dfrac{\partial \dot{\rho}^1}{\partial r_z} & \dfrac{\partial \dot{\rho}^1}{\partial v_x} & \dfrac{\partial \dot{\rho}^1}{\partial v_y} & \dfrac{\partial \dot{\rho}^1}{\partial v_z} & \dots & 0 & 1 \\ \dots & \dots & \dots & \dots & \dots & \dots & \dots & \dots & \dots \\ \dfrac{\partial \dot{\rho}^N}{\partial r_x} & \dfrac{\partial \dot{\rho}^N}{\partial r_y} & \dfrac{\partial \dot{\rho}^N}{\partial r_z} & \dfrac{\partial \dot{\rho}^N}{\partial v_x} & \dfrac{\partial \dot{\rho}^N}{\partial v_y} & \dfrac{\partial \dot{\rho}^N}{\partial v_z} & \dots & 0 & 1 \end{pmatrix}_{N \times 15} \qquad \dots (10)$$

where *N*-is the number of satellites in the radio coverage zone, ρ are the pseudoranges, and $\dot{\rho}$ is the navigating signal carrier frequency Doppler shift estimation.

The predicted state vector component estimation correlation error matrix *P* is calculated by Equation (11):

$$P_{k+1}^{-} = \Phi_k P_k \Phi_k^{T} + Q_k \qquad \dots (11)$$

The state vector predicted value *dx* is calculated by Equation (12):

$$dx_{k+1}^{-} = \Phi_{k+1} \cdot dx_k \qquad \dots (12)$$

Using the calculated values, the state vector and its correlation error matrix are calculated in step S213, by Equation (13):

$$K_{k+1} = P_{k+1}^{-} H_{k+1}^{T} \left( H_{k+1} P_{k+1}^{-} H_{k+1}^{T} + W_{k+1} \right)^{-1}$$

$$dx_{k+1} = dx_{k+1}^{-} + K_{k+1} \left( y_{k+1} - H_{k+1} dx_{k+1}^{-} \right)$$

$$P_{k+1} = P_{k+1}^{-} - K_{k+1} H_{k+1} P_{k+1}^{-}$$

$$y_k = \begin{pmatrix} \Delta \rho \\ \Delta \dot{\rho} \end{pmatrix} - \begin{pmatrix} \Delta \tilde{\rho} \\ \Delta \tilde{\dot{\rho}} \end{pmatrix} \qquad \dots (13)$$

In Equation (13), '~' designates the estimated measured values calculated by the evaluated positions and the mobile object velocity, and 'Δ' designates a difference of the corresponding observed values.

A correction vector in which elements contain the coordinate system angle determination error values associated to the mobile object 2 and the local coordinate system is generated in step S225from the state vector elements. The correction vector elements corresponding to the coordinate system angle determination error associated to the mobile object 2 and the local coordinate system, are appropriated zero values.

Using the generated correction vector, the correcting rotation matrix is generated, by which the rotation matrix *R* is corrected by its multiplication to the correcting matrix in step S227. This correction is performed at the given time interval τ.

The corrected rotation matrix *R* is used for transformation of the linear acceleration data of the mobile object 2 and generation of the state vector transfer matrix. By results of the calculated state vector, a current location of the mobile object 2 is determined.

The present invention is realized using: satellites 11 - IN from which the data is applied to the satellite navigation system receiver 3;any mobile object (device) 2 of which location needs to be periodically determined; the satellite navigation system receiver 3 by which the satellite data are received and transmitted to the computing device; the inertial navigation system measuring device 4 from which angular velocities of orthogonal axes X, Y and Z and the linear accelerations by the orthogonal axes are received; and the computing device for performing the following processes for realization by the embodiments disclosed herein.

The first embodiment discloses the performance of the following computing operations: the conversion of the data from the satellite navigation system receiver 3 from ECEF (Earth-centered fixed coordinate system) into the local coordinate system; the calculation of location, velocity of the mobile object and the rotation matrix $R$ on the basis of the data arriving from the inertial navigation system measuring device 4; and the calculation of the state vector and the current location of the mobile object 2.

The second embodiment discloses the performance of the following computing operations: the setting the set time interval $\tau$, conversion of the data from the satellite navigation system receiver 3 from ECEF (Earth-centered fixed coordinate system) into the local coordinate system; calculation of location, velocity of the mobile object and the rotation matrix $R$ on the basis of the data arriving from the inertial system measuring device 4; the correction of the rotation matrix $R$ in each time interval $\tau$; and the calculation of the state vector and the current location of the mobile object 2.

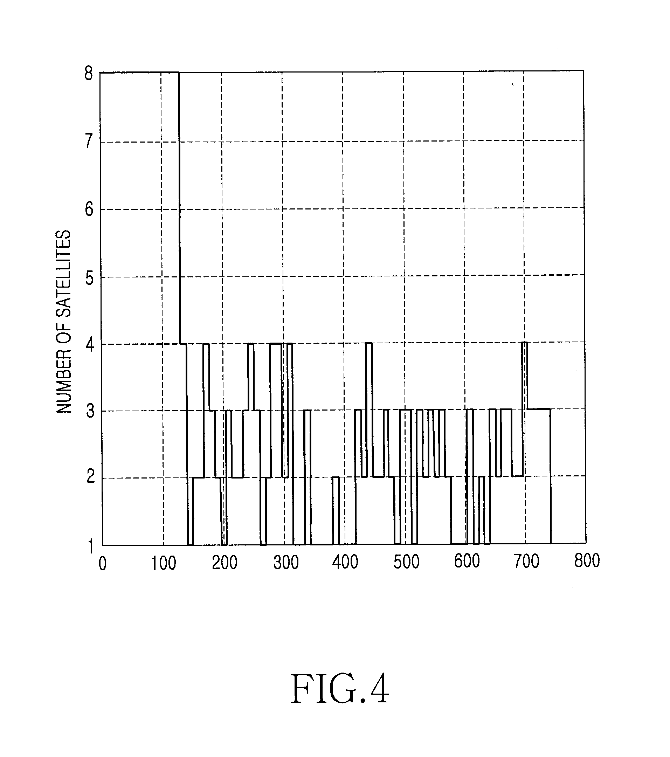

For acknowledgement of the invention efficiency, a computer simulation analysis of its algorithms has been conducted. The conditions of the simulation analysis are shown in FIG. 4.

FIG. 4 illustrates simulation conditions and dependence of the number of satellites time from the start of the movement. In particular, FIG. 4 illustrates the number of satellites as a function of the time elapsed from the movement beginning. The coordinate system associated to the mobile object 2 can be turned by some initial angles concerning the local coordinate system. Let us set these angles in axes X, Y, Z(-8°,10°,21°), accordingly. The initial movement velocity value is 10 m/s. The data from the inertial navigation system measuring device 4 arrive at the frequency 10 Hz, and the data from the satellite navigation system receiver arrive at the 1 Hz.

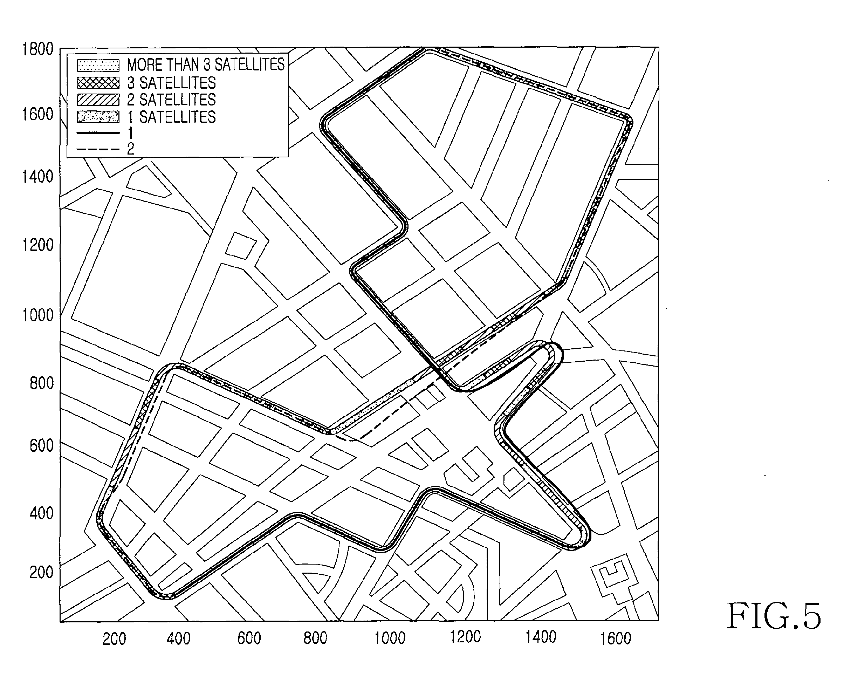

FIG. 5 illustrates the movement trajectory of the mobile object according to the first embodiment of the present invention. Line 1 illustrates the mobile object movement trajectory calculated by the known algorithm by Godha, and line 2 illustrates the mobile object movement trajectory calculated by the algorithm by the first embodiment of the present invention.

The case of the known initial location and the initial velocity of the mobile object 2 has been considered.

FIG. 5 illustrates that the algorithm according to the present invention allows object location determination when the number of visible satellites is less than 4. The present invention allows the correction of the data from the inertial navigation system measuring device. The present invention allows the determination of the initial angle between the coordinate system associated to the mobile object, and the local system. If calculations are performed in the limited bit rate (accuracy) conditions without introduced algorithm attributes according to the present invention, for example as in the known technical solution, instability of the algorithm is manifested, and the calculation of the object location becomes impossible.

The algorithm computer simulation analysis by the second embodiment of the present invention has been performed in the conditions similar to those of the algorithm simulation analysis by the first embodiment of the present invention, i.e. the coordinate system associated to the mobile object, can be turned at some initial angles concerning the local coordinate system. Let us set these angles by axes X, Y, Z (-8°,10°,21°), accordingly. The initial movement velocity value is 10 m/s. The data from the inertial navigation system measuring device 4 arrive at the frequency 10 Hz, and the data from the satellite navigation system receiver arrive at the 1 Hz. The dependence simulation analysis of the number of satellites from the time elapsed from the mobile object movement beginning has been set as shown in FIG. 4. However, a plenty of satellites in the movement beginning has been selected for determination of initial angles between the coordinate system associated to the mobile object and the local coordinate system. If in the movement beginning the number of satellites is less than 4, determination of this angle is not possible.

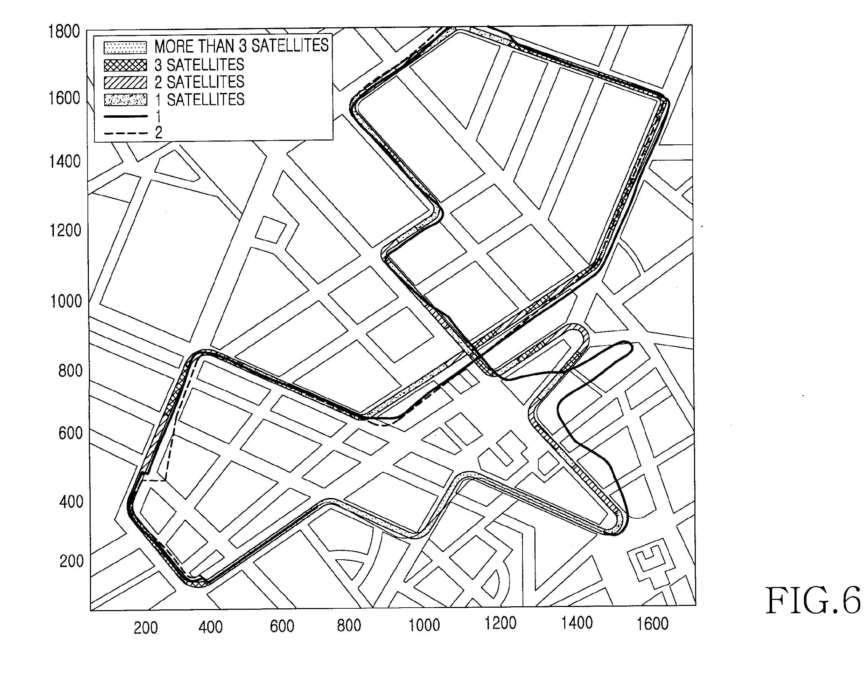

FIG. 6 illustrates the movement trajectory of the mobile object according to the second embodiment of the present invention. Line 1 illustrates the mobile object movement trajectory calculated by the known algorithm by Godha, and line 2 illustrates the mobile object movement trajectory calculated by the claimed method algorithm by the second embodiment of the present invention.

The case of the known initial location and initial velocity of the mobile object 2 has been considered. The angle between the coordinate system associated to the mobile object and the local coordinate system is not known.

FIG. 6 illustrates that the algorithm according to the present invention allows the object location determination when the number of visible satellites is less than 4. The present invention allows correction of the data from the inertial navigation system measuring device. The present invention allows determination of the initial angle between the coordinate system associated to the mobile object, and the local system.

The computer simulation analysis using the two algorithms simultaneously under the same conditions, as shown in FIG. 4, has also been conducted.

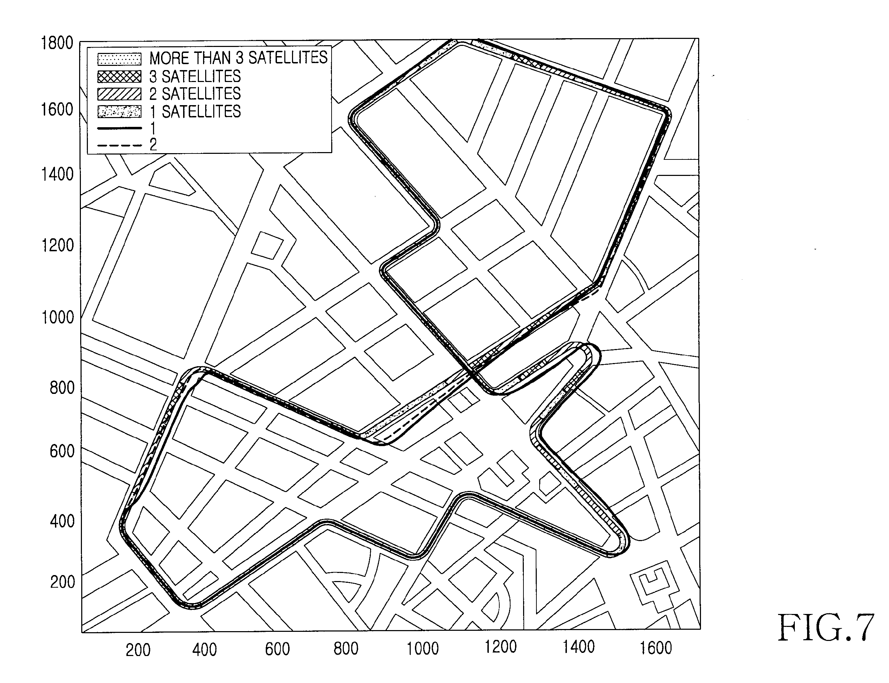

FIG. 7 illustrates the mobile object movement trajectory according to a combination of the first and second embodiments of the present invention. Line 1 illustrates the mobile object movement trajectory calculated by the claimed invention algorithm by the first embodiment of the present invention, and line 2 illustrates the mobile object movement trajectory calculated by the claimed method algorithms when the method by the first and second embodiments of the present invention is simultaneously used.

FIG. 7 illustrates that the algorithm according to the present invention allows the object location determination when the number of visible satellites is less than 4. The present invention allows correction of the data from the inertial navigation system measuring device. The present invention allows determination of the initial angle between the coordinate system associated to the mobile object, and the local system. If calculations are performed in the limited bit rate (accuracy) conditions without introduced algorithm attributes according to the invention, for example as in the known technical solution, instability of the algorithm is manifested, and calculation of the object location becomes impossible.

Thus, the conducted computer simulation analysis of the present invention has confirmed not only high efficiency of the invention at the mobile object location, but also allows a designer to construct the system to receive the maximum technical effect at use of the claimed invention.

The claimed invention by the first embodiment of the present invention is an improvement over the prior art in that: an essential reduction of computing operations for the mobile object location; reduction of dimensions of the computing device used at the mobile object thus making possible its use practically at any mobile object even those of small computation power; and provision of high accuracy of the mobile object location even in difficult conditions when the satellite signals are screened by the relief or buildings, or the satellite signal reception is temporarily not possible for any reasons.

The second embodiment of the present invention provides high accuracy of mobile object location even in difficult conditions when the satellite signals are screened by the relief or buildings, or the satellite signal reception is temporarily not possible for any reasons, stability improvement of the mobile object coordinate iterative estimation procedure.

Application of the invention by the first and/or second embodiments gives ample opportunities of choice of realization, allows a designer to construct the system to receive the maximum technical effect at use of the claimed invention.

A method for determining a location of a mobile terminal using satellite data from satellites and inertial data of the mobile terminal can be realized by hardware, software, or a combination thereof. This program can be stored in a volatile or nonvolatile recording medium readable by a machine such as a computer. This medium can be a storage device such as a read-only memory (ROM), a memory such as a random-access memory (RAM), a memory chip, or an integrated circuit, or an optical or magnetic recording medium such as a compact disk (CD), a digital versatile disk (DVD), a magnetic disk, or a magnetic tape. That is, a method for determining a location of a mobile terminal using satellite data from satellites and inertial data of the mobile terminal can be embodied in the form of program including codes. This program can be electrically transmitted through an arbitrary medium such as a communication signal propagated wirelessly, and the present invention includes equivalents thereof.

While the invention has been shown and described with reference to a certain embodiment thereof, it will be understood by those skilled in the art that various changes in form and details may be made therein without departing from the spirit and scope of the invention as defined by the appended claims.

**Claims**

**1.** A mobile terminal having a hybrid navigation system, comprising:

a satellite navigation system receiver for receiving satellite data from a satellite;
an inertial navigation system measuring device for measuring inertial navigation data of the mobile terminal; and
a computing device for receiving the satellite data from the satellite navigation system receiver and the inertial navigation data from the inertial navigation system measuring device, estimating a location of the mobile terminal using the inertial navigation data, computing a state vector having location information obtained by correcting the estimated location using the satellite data and a state vector correlation error matrix having error information of the state vector, and determining the location of the mobile terminal using the state vector,

wherein the computing device uses a previously computed state vector correlation error matrix computed in when computing a state vector correlation error matrix in a current step, each element of the previously computed state vector correlation error matrix is compared to a threshold value, and the permitted number of elements exceeding the threshold value is set to at least 1.

**2.** The mobile terminal of claim 1, wherein the satellite data includes information about a location and velocity of the satellite and the inertial navigation data includes information about acceleration of the mobile terminal.

**3.** The mobile terminal of claim 1 or 2, wherein when the state vector is computed, the computing device uses an approximation calculation formula

$$\left(W + H \cdot P \cdot H^{T}\right)^{-1} \approx \frac{1}{W}\left(1 - H \cdot P \cdot H^{T}/W\right),$$

where W is a satellite measurement correlation error matrix related to the satellite data, H is a matrix related to differentiation of the satellite data for elements of the state vector, and P is the state vector correlation error matrix.

4. The mobile terminal of any preceding claim, wherein the computing device converts a coordinate system of the satellite data and the inertial navigation data into a coordinate system of a region where the mobile terminal is located, and uses the converted satellite data and the converted inertial navigation data when computing the state vector.

5. The mobile terminal of any preceding claim, wherein the computing device converts a coordinate system of the satellite data and the inertial navigation data into a coordinate system of a region where the mobile terminal is located, uses the converted satellite data and the converted inertial navigation data when computing the state vector, and a rotation matrix to be used when converting the inertial navigation data is corrected using the state vector.

6. The mobile terminal of claim 5, wherein the rotation matrix is generated using information about an angle of the mobile terminal for each of orthogonal axes *X*, *Y* and *Z* included in the inertial navigation data.

7. The mobile terminal of claim 5 or 6, wherein the computing device sets a time interval and periodically corrects the rotation matrix at the time interval.

8. A method for determining a location of a mobile terminal using satellite data from a satellite and inertial navigation data of the mobile terminal, comprising:

   converting a coordinate system of the satellite data and the inertial navigation data into a coordinate system of a region where the mobile terminal is located;
   estimating the location of the mobile terminal using the converted inertial navigation data; and
   computing a state vector having location information obtained by correcting the estimated location using the satellite data and a state vector correlation error matrix having error information of the state vector, and determining the location of the mobile terminal using the state vector,

   wherein a previously computed state vector correlation error matrix is used when computing a state vector correlation error matrix in a current step, each element of the previously computed state vector correlation error matrix is compared to a threshold value, and the permitted number of elements exceeding the threshold value is set to at least 1.

9. The method of claim 8, wherein a rotation matrix to be used when converting the inertial navigation data is corrected using the state vector and the rotation matrix is generated using information about an angle of the mobile terminal for each of orthogonal axes *X*, *Y* and *Z* included in the inertial navigation data.

10. A computer-readable recording medium for recording a computer program to execute a method for determining a location of a mobile terminal using satellite data from a satellite and inertial navigation data of the mobile terminal, the location determining method comprising:

    the method according to claim 8 or 9.

$1_1$   $1_2$   $1_N$

SATELLITE NAVIGATION SYSTEM RECEIVER 3 ~3

INERTIAL NAVIGATION SYSTEM MEASUREMENT UNIT 4 4~

MOBILE OBJECT 2   ~2

5

COMPUTING DEVICE 5

MOBILE OBJECT POSITION

FIG.1

START

S121
RECEIVE THE DATA
FROM THE INERTIAL
NAVIGATION SYSTEM
MEASUREMENT DEVICE

S101
RECEIVE
SATELLITE DATA

S103
GENERATE TWO
ROTATION MATRIXES

S107
GENERATE MATRIXES
F, Q, W

S123
GENERATE ROTATION
MATRIX R

S105
CONVERT SATELLITE
COORDINATES AND
VELOCITIES

S109
MULTIPLY Q
AND W AT
WEIGHT FACTORS

S125
CONVERT THE
OBTAINED LINEAR
ACCELERATION DATA

S111
GENERATE THE MATRIX
H, CALCULATE THE
PREDICTED dx AND P

S127
CALCULATE THE
MOBILE OBJECT
POSITION AND VELOCITY

S117
COMPARE THE
MATRIX P ELEMENT
VALUES TO
THE THRESHOLD

S113
CALCULATE dx
AND P

S115
DEFINE THE
CURRENT POSITION

FIG.2

15

START

SET TIME
INTERVAL τ — S207

S201

RECEIVE
SATELLITE DATA

S217

RECEIVE THE DATA
FROM THE INERTIAL
NAVIGATION SYSTEM
MEASUREMENT DEVICE

S203

GENERATE TWO
ROTATION MATRIXES

S209

GENERATE MATRIXES
F, Q, W

S219

GENERATE ROTATION
MATRIX R

S205

CONVERT SATELLITE
COORDINATES AND
VELOCITIES

S221

CONVERT THE
OBTAINED LINEAR
ACCELERATION DATA

S211

GENERATE THE MATRIX
H, CALCULATE THE
PREDICTED dx AND P

S223

CALCULATE THE
MOBILE OBJECT
POSITION AND VELOCITY

S213

CALCULATE dx
AND P

S225

GENERATE THE
VECTOR FROM
ELEMENTS dx

S215

DEFINE THE
CURRENT POSITION

S227

CALCULATE THE
CORRECTION MATRIX

FIG.3

FIG.4

FIG.5

FIG.6

FIG.7

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7193559 B
- US 6900760 B
- US 6516021 B
- US 6480152 B

**Non-patent literature cited in the description**

- Reference WGS 84 Implementation Manual. European Organization for the Safety of Air Navigation, Institute of Geodesy and Navigation (IfEN). 12 February 1998, 68
- Reference WGS 84 Implementation Manual. European Organization for the Safety of Air Navigation, Institute of Geodesy and Navigation (IfEN). 12 February 1998, 100